# EUROPEAN PATENT SPECIFICATION

(11) **EP 2 093 997 B1**
(45) Date of publication and mention of the grant of the patent: **06.12.2017**
(21) Application number: 08165874.2
(22) Date of filing: 03.10.2008
(51) Int. Cl.: H04N 5/378, H04N 5/3745, H04N 5/347, H04N 5/343, H04N 5/374, H04N 5/232

(54) **Active pixel array with charge binning**
Aktiver Pixel-Array mit Lastlagerung
Réseau de pixels actifs avec groupement de charge

(30) Priority: 22.02.2008 GB 0803278
(43) Date of publication of application: 26.08.2009
(73) Proprietor: CMOSIS nv, 2000 Antwerpen (BE)
(72) Inventor: Meynants, Guy, 2470 Retie (BE)
(74) Representative: Epping - Hermann - Fischer

(56) References cited:
- DE-A1- 19 947 536
- FR-A1- 2 863 435
- US-A1- 2006 274 176

## Description

### FIELD OF THE INVENTION

This invention relates to semiconductor pixel arrays for use in image sensors.

### BACKGROUND TO THE INVENTION

In some imaging applications, such as digital cameras, it is desirable to provide a preview mode in which an operator of the camera is provided with a preview of the final image. This preview image can be used to compose the final image and also displays the effects of exposure and focus settings. Typically, this preview mode provides a low-resolution preview image which is refreshed at a frequent frame rate. The image sensor of the camera must be capable of supporting this preview mode.

It is known to manufacture image sensors using CCD technology or CMOS technology. Image sensors manufactured using CMOS technology are generally categorised as "passive pixels", where charge is read directly from the pixel and amplified (converted to a voltage) elsewhere in the image sensor array, or "active pixels", where each pixel includes a buffer amplifier which locally performs the charge-to-voltage conversion. While passive pixel CMOS sensors have been used in the past, they have now largely been superseded by active pixels.

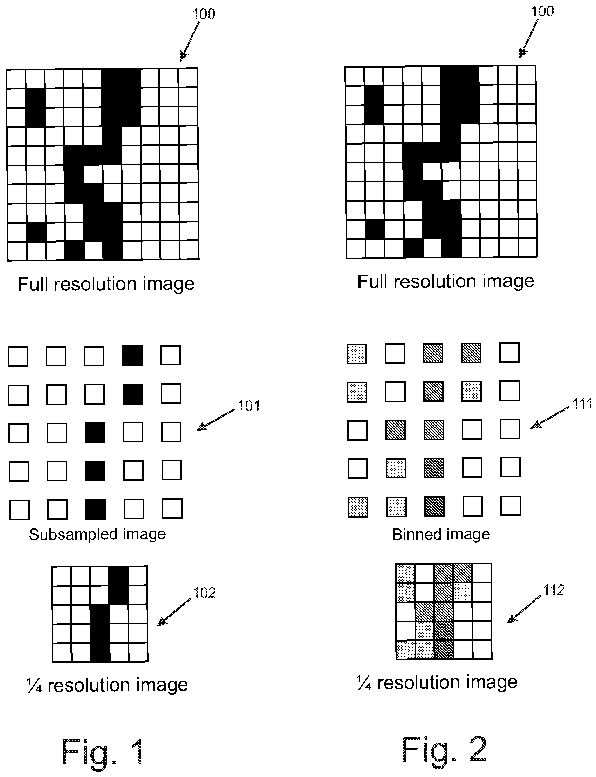

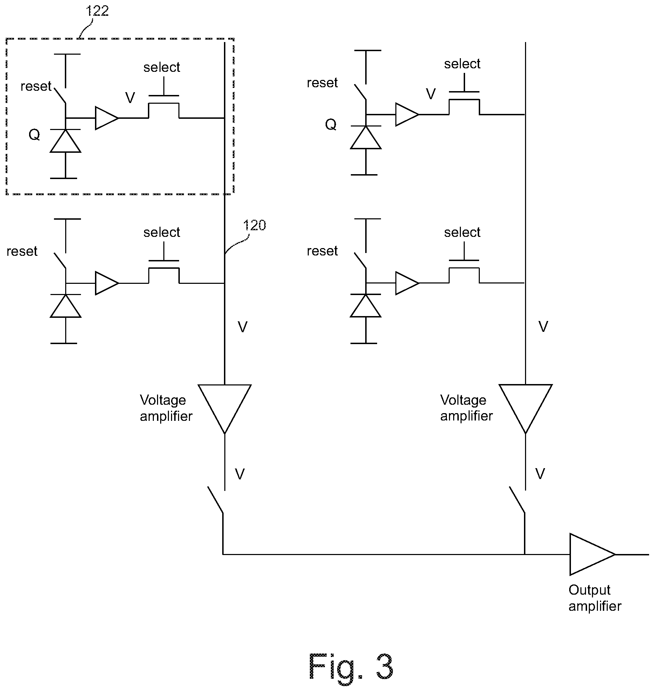

In an active pixel CMOS image sensor it is possible to create a low resolution preview image by sub-sampling of the pixel array. This means that only a fraction of the pixels are read out. Pixels which are not used in the preview image are skipped. Because a limited amount of data needs to be read out from the image sensor this normally allows each preview image to be rapidly constructed, and therefore allows a high frame rate. This process is illustrated in Figure 1. A full resolution image 100 is shown, which represents the full set of pixel data in the pixel array. A sub-sampled set of pixel data 101 is created by examining the value of only one quarter of the pixels in the full pixel array 100, i.e. the value of one pixel in every block of four neighbouring pixels contributes to the preview image. This results in a one quarter resolution image 102. This method can produce low-quality images because of aliasing issues. Fine details in the image may disappear or may create severe aliasing effects, commonly called Moiré effects. Another problem of this method is that, under low light conditions, the frame rate of the preview image cannot be increased. This is because, under low light conditions, the exposure time to obtain a reasonable signal-to-noise ratio on the pixel is longer than the readout time of the sensor. The frame rate is then limited by the exposure time rather than by the readout time of the sensor. This exposure time is identical for low and high resolution images. So, the sub-sampling process does not allow an increase in the frame rate of the preview image under these conditions. Figure 3 shows an active pixel array comprising four pixels 122 arranged in two columns. Here the conversion of charge to voltage occurs inside the pixel 122. Although this charge-to-voltage conversion at each pixel has advantages, it prevents signals from multiple pixels from being added together on the column bus 120.

As explained above, image sensors can be manufactured using CMOS or CCD technology. Charge Coupled Devices (CCDs) allow an operation known as charge binning, or simply "binning". Photocharges from adjacent pixels can be added together by modifying the clocking sequence of the pixel array. This can be used to read out a lower resolution image after a shorter exposure time and the addition of charges is achieved without noise. Under low light conditions, the signal of several adjacent pixels can be added together. The read noise remains at the same level as for a single pixel. The exposure time can be reduced proportionally to the number of pixels that are added, to obtain the same signal-to-noise ratio. This means that the exposure time can be shorter in low light conditions than the exposure time of a sub-sampled active pixel CMOS image sensor as previously described. Charge binning requires a special clocking scheme for the CCD and the design of the CCD has to support this. The operation of CCD devices is incompatible with active pixel devices.

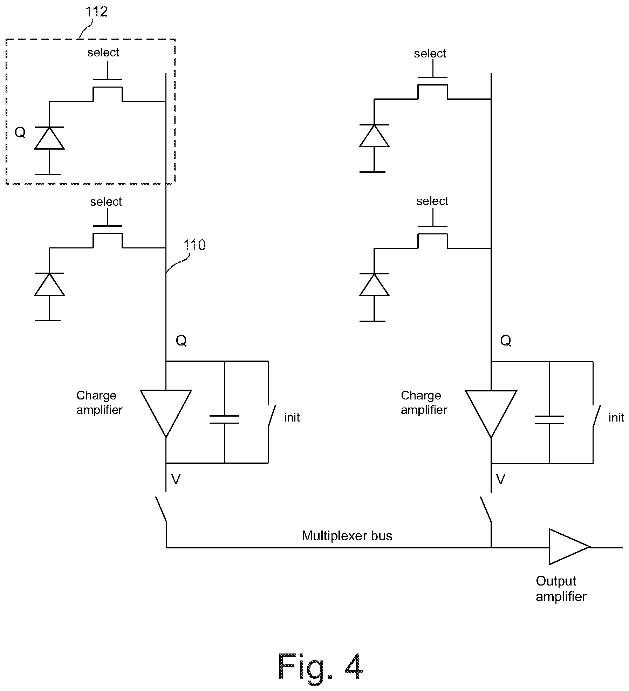

Passive pixel CMOS sensors can operate in a charge binning mode. Figure 4 shows an example of a passive pixel array. Four pixels 112 are shown, arranged in two columns. Charge from each pixel 112 is selectively transferred to a column bus 110 and converted into a voltage signal in the charge amplifier for that column. To perform charge binning, charge is simultaneously transferred from several pixels 112 of the same column to the column bus 110. The drawback of passive pixels however, is that their read noise is high. The capacitance of the column bus is very large, and the charge transferred to this bus is low. The voltage signal that appears on the column bus is therefore very small. Furthermore, for large resolution image sensors, the capacitance of the bus increases and the charge packet decreases. This makes it impossible to use this method for high resolution image sensors.

There have been some attempts to perform pixel binning in active pixel CMOS devices. US 7,091,466 describes two approaches to binning in an array of active pixels. In one embodiment, binning is implemented by voltage summation via column lines connecting pixels. However, this is acknowledged to have non-linearity issues and will often have the effect of outputting the signal of the darkest pixel of a group of selected pixels. Only when the signals of all pixels are equal, a signal more or less corresponding to the average level is obtained. In another embodiment, binning is implemented by summing currents. However, the buffer transistor in the pixel then has to operate in an inverting amplifier configuration, with limited bandwidth for large column lines. Also, for relatively large differences between the photodiode signals (a few times kT/q or approx 100 mV), the signal of the darkest pixel of the binning group is read out.

US 6,878,918 describes binning transistors which directly connect neighbouring pixels. During the reset portion of the imaging cycle, groups of adjacent pixels are connected by the binning transistors such that charge injected by the resetting of a pixel is averaged among neighbouring pixels. US 2006/0274176, WO 2006/130518A1 and WO 2005/107235A1 describe active pixels with switches for selectively connecting charge-to-voltage conversion regions of adjacent pixels. This permits charge binning only between adjacent pixels of an array. DE 199 47 536 describes a passive pixel image sensor in which the charge outputs of vertically and horizontally adjacent pixels can be selectively combined by means of switches in order to improve the signal to noise ratio in an x-ray imager.

The present invention seeks to provide an alternative way of providing a function such as a preview image from a pixel array of an image sensor, especially an active pixel CMOS image sensor.

### SUMMARY OF THE INVENTION

A first aspect of the present invention provides a pixel array comprising:
a plurality of pixels;
an active pixel mode column output line for a column of pixels;
a passive pixel/charge binning mode column output line for the column of pixels,
   and wherein each pixel in the column comprises:
   a photo-sensitive element for generating charges responsive to electromagnetic radiation;
   a buffer amplifier for buffering a voltage proportional to the charges generated by the photo-sensitive element;
   a first switch for selectively connecting an output of the buffer amplifier to the active pixel mode column output line;
   a second switch for selectively transferring at least part of the charges generated by the photo-sensitive element to the passive pixel/charge binning mode column output line.

Active pixels, which include a buffer amplifier, have an advantage of offering a good signal-to-noise ratio and low noise. Allowing the pixel to also transfer charge to a column output line in a passive pixel mode allows charge binning to be performed using groups of pixels. The passive pixel/charge binning mode can be used for a variety of applications, such as to provide a preview mode at a high frame rate and at a lower resolution than that used for the active pixel read-out mode. Providing a preview mode by charge binning overcomes disadvantages of conventional techniques for providing a preview mode using active pixel CMOS sensors, such as sub-sampling. The passive pixel mode can additionally, or alternatively, be used to provide a light metering function. A plurality of different light metering modes can be provided (e.g. centre-weighted, spot) with each light metering mode binning charge from a particular pattern of pixels in the pixel array. The binning pattern, which is the set of pixels added together during the passive pixel/charge binning mode, can be selectively controlled by control circuitry of the pixel array, and is not limited to pixels which are directly adjacent to another in the array.

The pixel can be arranged such that a partial, or a full, transfer of charges generated by the photo-sensitive element occurs. In a full charge transfer no charge remains on the photo-sensitive element. In a charge sharing operation, generated charges are redistributed between the nodes positioned at each side of the second switch. If both nodes have equal capacitance, the noise increases with sqrt(2). If one node has a much larger capacitance, as is the situation with the passive mode column output line, then the noise (in voltage domain) will be sqrt(kT/C), i.e. large on the photo-sensitive element and small on the column bus (in voltage domain).

Typically, the photo-sensitive element is a photodiode, although other types of photo-sensitive element can also be used.

Embodiments of the invention comprise modified forms of active pixels. In a conventional three-transistor (3T) active pixel, a photodiode is connected directly to an input of a buffer amplifier. The second switch is connected to the photodiode, which is also the input to the buffer amplifier. In a charge transfer pixel (4T pixel) a charge transfer transistor is connected between the photo-diode and the input to the buffer amplifier. The input to the buffer amplifier is typically called the floating diffusion, or sense node. In one embodiment, the second switch is connected between the output of the charge transfer transistor (i.e. the floating diffusion) and the passive pixel mode column output line. In an alternative embodiment, the second switch is connected directly between the output of the photo-sensitive element and the passive pixel/charge binning mode column output line.

Typically, in each of the 3T and 4T configurations, there is also a reset transistor which is arranged to reset the input to the buffer amplifier to a reference voltage. Advantageously, the reset transistor is used as the second switch. On a time-shared basis, the passive pixel/charge binning mode column output line is operable as a supply line for providing the reference voltage, and as an output line. This has a significant advantage of not requiring any additional transistors to provide the new functionality, which can avoid the need to reduce fill factor of the pixels to provide the additional functionality.

As an alternative to re-using the reset transistor as the second switch, it is possible to provide a dedicated transistor as the second switch for the purpose of transferring charge to the passive pixel/charge binning mode column output line. The further transistor can be connected between the input to the buffer amplifier and the passive pixel/charge binning mode column output line (in a 3T or a 4T configuration), or directly to the photo-sensitive element (in a 4T configuration).

In another embodiment of the invention, a single column output line is operable, in a time-shared manner, as the passive pixel/charge binning mode column output line and as the active mode column output line. This reduces the number of output lines.

Embodiments of the invention are described in which 3T or 4T active pixels are modified to allow a passive pixel/charge binning mode of operation. However, it should be understood that the invention is not limited to 3T or 4T active pixels, and can also be applied to pixels which comprise more than four transistors and/or pixels which comprise extra functionality. The extra pixel functionality can be, for example, global shutter operation, feature extraction, edge enhancement or other image processing steps inside the pixel, or binarization or digitalization in the pixel.

In a further embodiment of the invention, the pixel is a shared pixel in which a group of at least two photo-sensitive elements are each selectively connectable to a single read out circuit. Advantageously, the second switch is the reset transistor for the shared pixel although, less desirably, a dedicated transistor can be used.

Advantageously, each column has a column amplifier which is used, on a time-shared basis, for the active pixel mode, and as a charge-to-voltage converter for the passive pixel/charge binning mode. The charge-to-voltage converter can comprise a charge amplifier.

Advantageously, each column has a column amplifier which is arranged, during the passive pixel/charge binning mode, to sample a reset signal level and a measurement signal level.

Advantageously, the pixel array further comprises a switch for selectively connecting the passive pixel mode column output line to a supply voltage during the active pixel mode.

Advantageously, the pixel array is fabricated in CMOS technology.

Advantageously, the pixel array further comprises a controller arranged to cause the pixels to be selectively operated in: an active pixel mode in which the first switch is operated to cause an output of the buffer amplifier in the pixel to be connected to the active pixel mode column output line; and a passive pixel/charge binning mode in which the second switch is operated to cause at least part of the charge from the pixel to be transferred to the passive pixel/charge binning mode column output line.

A further aspect of the present invention provides a method of reading an array of pixels, the array comprising an active pixel mode column output line for a column of pixels, a passive pixel/charge binning mode column output line for the column of pixels and each pixel comprising a photo-sensitive element for generating charges responsive to electromagnetic radiation, a buffer amplifier for buffering a voltage proportional to the charges generated by the photo-sensitive element, a first switch for selectively connecting an output of the buffer amplifier to an active pixel mode column output line and a second switch for selectively transferring charges generated by the photo-sensitive element to a passive pixel mode column output line, the method comprising selectively operating the pixels of a column of the array in: an active pixel mode in which the first switch of a pixel is selectively operated to cause an output of the buffer amplifier in the pixel to be connected to the active pixel mode column output line; and, a passive pixel/charge binning mode in which the second switch of the pixel is selectively operated to cause at least part of the charges from the pixel to be transferred to the passive pixel mode column output line.

Advantageously, the array further comprises a charge-to-voltage converter connected to at least one of the passive pixel mode column output lines which is arranged to generate a voltage in response to charge transferred to the passive pixel/charge binning mode column output line, the method further comprising: in the passive pixel/charge binning mode, operating the second switches in a column of pixels to cause charge from multiple pixels in the column to be transferred to the passive pixel mode column output line and reading the voltage corresponding to the charge contributed by the multiple pixels.

Advantageously, a total set of pixels in a column are arranged in sub-sets and the method further comprises: operating the second switches of a sub-set of the pixels in a column and reading the voltage during a first reading period; and operating the second switches of other sub-sets of the pixels in the column and reading the voltage during respective other reading periods.

Advantageously, the method further comprises selectively connecting the passive pixel/charge binning mode column output lines of at least two columns in the array during the passive pixel/charge binning mode and reading the voltage corresponding to the charge contributed by pixels of the at least two columns.

Throughout this specification, it should be noted that the term "row" and "column" can be interchanged. Also, the term "row" does not imply a particular orientation of the array. The present invention can also be applied to a line of pixels which are arranged diagonally across the pixel array.

### BRIEF DESCRIPTION OF THE DRAWINGS

Embodiments of the invention will be described, by way of example only, with reference to the accompanying drawings in which:
Figure 1 shows a known way of sub-sampling an array of active pixels to provide a low-resolution preview image;
Figure 2 shows a known way of charge-binning an array of pixels to provide a low-resolution preview image;
Figure 3 shows a conventional array of active pixels;
Figure 4 shows a conventional array of passive pixels;
Figure 5 shows a conventional 3T active pixel;
Figure 6 shows a 3T active pixel modified in accordance with an embodiment of the present invention to allow a passive pixel/charge binning mode of operation;
Figure 7 shows an array of the pixels of Figure 6;
Figure 8 shows conventional charge transfer (pinned diode) pixel;
Figure 9 shows a charge transfer pixel modified in accordance with an embodiment of the present invention to allow a passive pixel/charge binning mode of operation;
Figure 10 shows an array of the pixels of Figure 9 and a charge amplifier connected to a passive pixel mode output line;
Figure 11 shows a variant of Figure 10 where a column amplifier selectively reads from the active mode output bus or an output of the charge amplifier connected to the passive mode output bus;
Figure 12 shows an example of a double sampling column amplifier;
Figure 13 shows a variant of Figure 10 where a column amplifier selectively reads from the active mode output bus or directly from the passive mode output bus;
Figure 14 shows a variant of Figure 13 where a single column bus is used as a supply line for the buffer amplifiers and as a readout bus for passive pixel mode;
Figure 15 shows an active pixel modified in accordance with a further embodiment of the present invention to allow a passive pixel/charge binning mode of operation, with an additional read transistor;
Figure 16 shows a charge transfer pixel modified in accordance with a further embodiment of the present invention to allow a passive pixel/charge binning mode of operation;
Figure 17 shows an array of the pixels of Figure 16;
Figure 18 shows an alternative form of the pixel of Figure 16 in which a second transfer gate M5 is connected directly to the photodiode to allow a passive pixel/charge binning mode operation;
Figures 19 to 21 show an embodiment of a pixel in which a single output line is used on a time-shared basis as an active pixel mode output line and a passive pixel mode output line;
Figure 22 shows overall architecture of a pixel array and associated control functions;
Figure 23 shows a sequence of charge binning steps for creating a low resolution image; and,
Figure 24 shows an example pattern of pixels for a charge binning operation to provide centre-weighted metering.

### DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

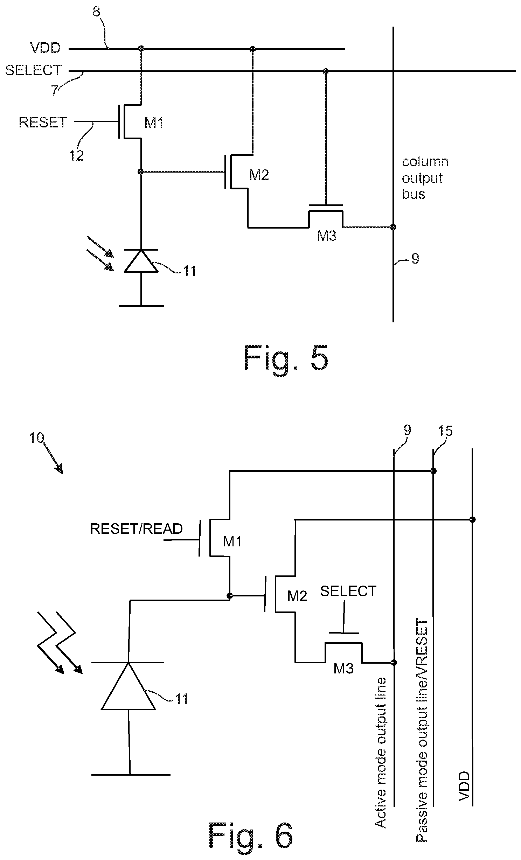

By way of background, Figure 5 shows a conventional three transistor (3T) Active Pixel Sensor (APS), or active pixel. The active pixel comprises a photodiode 11 and a transistor M1 connected between the cathode of the photodiode 11 and a supply line VDD 8. Transistor M1 is controlled by a signal RESET. A transistor M2 is also connected to the cathode of the photodiode 11 and is configured as a source-follower amplifier which acts as a buffer amplifier for the signal generated by the photodiode 11. A transistor M3 connects between the buffer amplifier M2 and an output bus 9 and is controlled by a signal SELECT provided by control line 7. At the beginning of an image capture, reset transistor M1 initialises the cathode of the photodiode 11 to a known voltage VDD, provided by supply line 8. After the photodiode 11 has been reset, radiation incident on the photodiode 11 generates a photocurrent which starts to integrate charge at the gate of a source-follower/buffer amplifier M2. Buffer amplifier M2 performs a charge-to-voltage conversion function, with the voltage being dependent on the amount of charge stored at the gate of transistor M2. At the end of an image capture, select transistor M3 is enabled, via a SELECT signal on line 7, to apply the voltage from buffer amplifier M2 to column output bus 9.

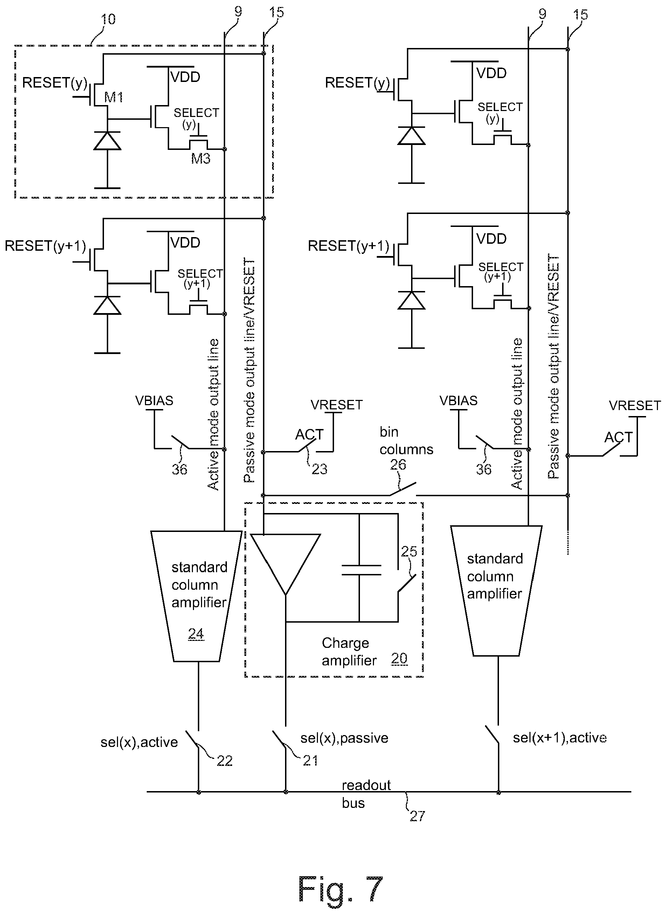

Figure 6 shows a first embodiment of an active pixel 10 in accordance with the present invention. The active pixel of Figure 6 has the same number of transistors (three transistors) as the conventional active pixel shown in Figure 5. The reset transistor M1 is connected to a new passive mode output line 15. This output line 15 serves two functions: (i) it can provide the supply VRESET for use during a pixel reset operation; (ii) it can serve as an output bus to which charge from selected pixels in a column is transferred. The two functions are provided on a time-shared basis. Figure 7 shows the corresponding architecture of an array of the pixels shown in Figure 6. For clarity, Figure 7 shows just four pixels 10, arranged in two columns (x, x+1) and two rows (y, y+1), although it will be appreciated that a typical array will comprise a significantly larger number of pixels. There is a passive mode output line 15 for each column of the array. Each passive mode output line 15 connects to a charge amplifier 20. The charge amplifier 20 converts the charge signal of the passive pixel readout bus into a voltage signal. Output line 15 is connected to a supply VRESET (typically VDD) via a switch ACT 23. For conventional active pixel operation, switch ACT 23 is closed. In active pixel mode, e.g. for a full resolution readout, each pixel 10 is operated as follows:
- the passive mode line 9 is connected to a voltage used to reset the active pixel, (typically, but not necessarily, VDD);
- the reset/read transistor M1 is operated as a reset transistor in a standard active pixel;
- charge which has accumulated on photodiode 11 since the last RESET operation is converted to a voltage signal, and buffered, by buffer amplifier M2;
- the pixel is read by selecting transistor M3. Selecting a pixel causes the buffer amplifier voltage to be applied to output line 9;
- column amplifier 24 buffers and amplifies, if necessary, the voltage signal on line 9. The voltage output of each column amplifier 24 is selectively read by operating switch 22 and this causes the voltage from the column amplifier 24 to be output onto the readout bus 27.

For passive pixel (charge binning) operation, switch ACT 23 is open. This allows line 15 to be used as an output line rather than a supply line. In the passive pixel mode, the pixel is operated as follows:
- the first column output line 9 is connected to a DC bias voltage VBIAS (typically VDD) by a switch 36;
- the SELECT transistor M3 is switched off;
- switch 25 in the charge amplifier 20 is closed to put the passive mode column bus 15 at the reference voltage of the charge amplifier;
- switch 25 is opened again;
- the pixel is read out by closing RESET/READ transistor M1. Charge from the photodiode 11 is dumped on the passive mode column bus 15 when this reset/read transistor M1 is closed. This causes a voltage change on passive mode column bus 15;
- charge amplifier 20 amplifies the charge signal and converts it into a voltage signal. The voltage output of each charge amplifier 20 is selectively read by operating switch 21 and this causes the voltage from the charge amplifier 20 to be output onto the readout bus 27.
- if required, the pixel is reset by closing switch 25.
- RESET/READ transistor M1 of the pixel is switched off. This ends the read cycle, and the pixel can start to acquire the charge for the next exposure period.

In passive pixel mode, the pixels 10 put their charge signal on the passive pixel readout bus 15 when the pixel reset switch M1 is closed. For charge binning, signals of multiple pixels 10 are dumped on to the passive mode column bus 15 during a common measurement period. This dumping of charge from different pixels 10 can occur simultaneously, or over a short collection period. The binning of charge from multiple pixels also increases the signal on the passive mode column bus 15. Column buses 15 can be connected together to obtain binning of charges in the horizontal (row) direction. Switch 26 allows charge from columns x and x+1 to be combined. Further switches can allow charge to be binned between other combinations of columns, which need not be directly adjacent to one another. As an example, in a colour array having columns of pixels which separately record the amount of red, green and blue light, the columns contributing the same colour can be connected together (e.g. connect red column to the next red column).

Row driver circuits comprise control logic which generate RESET signals to selected rows of the array at particular times. To support the charge binning operation, the row driver circuits are configured to pulse several reset/read lines concurrently (or near concurrently) to allow charge binning from multiple pixels.

The passive pixel mode can suffer from imaging issues such as smear (white columns through heavily overexposed pixels) and a higher temporal noise. However, for a low resolution preview mode, these issues are less important. When acquiring a full resolution image from the array, the active pixel mode is utilised, which does not suffer from these issues.

When operating in the charge binning/passive pixel mode, charge is binned from a group of pixels. The quantity of binned charge is a sum of charge collected from the group of pixels. This can be converted to an average quantity per pixel by one of a variety of techniques. One of the simplest ways to derive the average charge is to scale the exposure time proportionally with the number of binned pixels. So, if charge is binned from four pixels, the exposure time can be reduced by a factor of four. If a better signal-to-noise ratio is required (e.g. because of the issues with passive mode readout), it is possible to reduce the exposure time by a factor which is not proportional to the number of binned pixels, but a lower factor. This can help to achieve a higher signal whilst the noise remains the same.

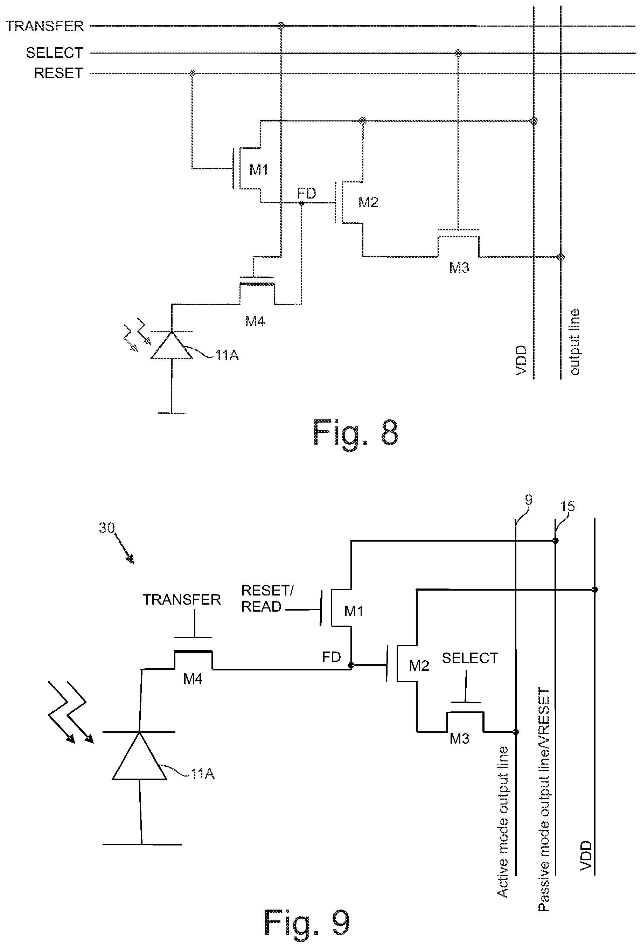

By way of background, Figure 8 shows a conventional charge transfer pixel, or pinned diode pixel. In this type of pixel, charge is transferred from a photodiode 11A to a sense node, also called a floating diffusion node FD. The reset transistor M1 and source-follower buffer amplifier M2 are connected to this floating diffusion node. Charge is transferred from the photodiode 11 to the sense node via transistor M5, which is controlled by a signal TRANSFER carried by a dedicated control line.

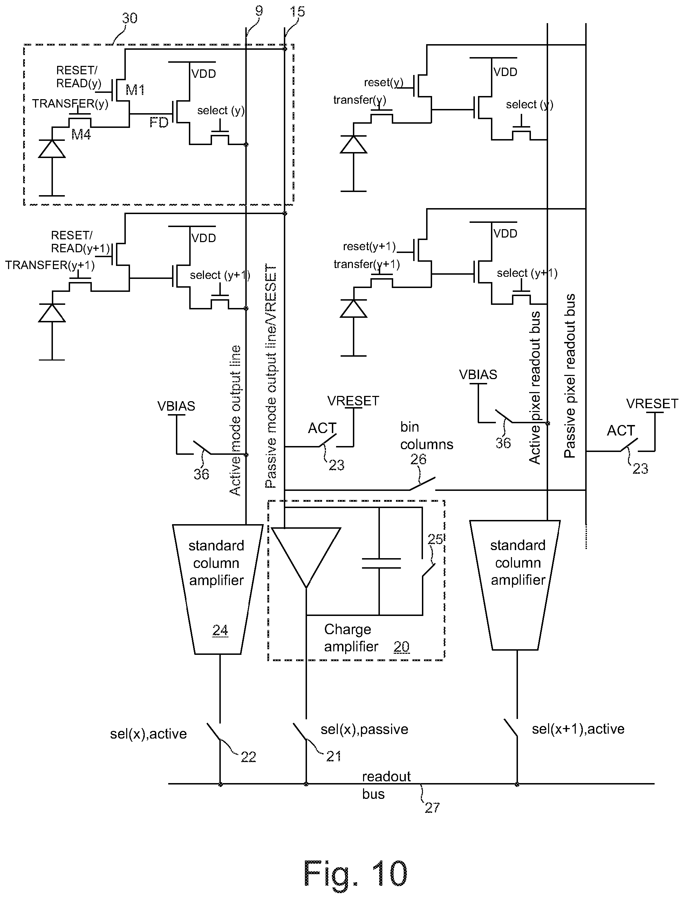

Figure 9 shows another embodiment of the invention, showing how a charge transfer, or pinned diode, pixel can be modified to allow the pixel to be read in a passive manner and in an active manner. In a similar manner to Figure 6, an output line 15 serves two functions on a time-shared basis: (i) a supply line to supply the voltage VRESET for use during a pixel reset operation; (ii) an output bus to which charge from selected pixels in a column is transferred. The two functions are provided on a time-shared basis. Figure 10 shows the corresponding architecture of an array of the pixels shown in Figure 9. The charge transfer transistor M4 transfers charge from the pinned photodiode 11A to the sense node FD. In passive pixel mode, this charge is dumped immediately onto the column line 15. The reset/read transistor M1 is completely switched on (in saturation). Charge transfer transistor M4 transfers all charge from the photodiode to the floating diffusion node FD, and when transistor M1 is on, the charge is dumped directly to the passive mode column bus 15. This pixel can be operated with correlated double sampling: first the column bus is reset and the reset level is stored. Then the charge(s) of the pixel(s) are dumped on the column bus and the sample is read. The image sensor contains an on-chip subtraction circuit so that the output of the image sensor is the difference between the sample and the reset level, free from offset errors or noise variations on the reset level.

The architecture of Figure 10 is similar to that of Figure 7, and the same reference numerals have been used for the same items. There is a combined passive mode output line/VRESET supply line 15 for each column of the array. Each passive mode output line 15 connects to a charge amplifier 20. The charge amplifier 20 converts the charge signal of the passive mode bus 15 into a voltage signal. Output line 15 is also connected to a supply VRESET (typically VDD) via a switch ACT 23. In charge binning mode the array of pixels can be operated as follows:
1. all the pixel rows that need to be binned together are selected by closing the respective pixel reset/read switch M1. The floating diffusion node FD is reset by closing switch 25 of the charge sense amplifier. The reset level must be low enough so that the NMOS pixel reset switch M1 can be fully operated in saturation. The pixel reset/read switches M1 remain closed also in the next step. Adjacent passive pixel column buses 15 that require to be binned, are connected together by the column binning switches 26. The switch 25 opens again now, and the reset reference signal remains on the passive mode output line 15;
2. the transfer gates M4 are pulsed for all the rows that have to be binned together. This causes the charges from the photodiodes 11A to be dumped onto the passive pixel column bus 15. This charge signal on column bus 15 is amplified and converted into a voltage signal by the charge amplifier;
3. the voltage signal is multiplexed by switch 21 to the readout bus 27;
4. optionally, the floating diffusions, photodiode and column line are reset by closing switch 25.

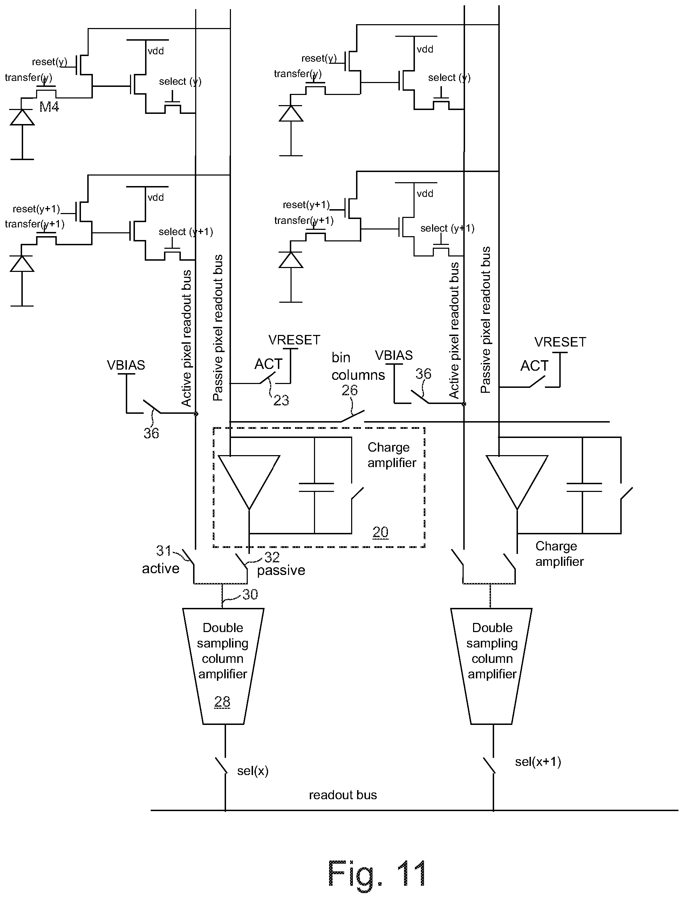

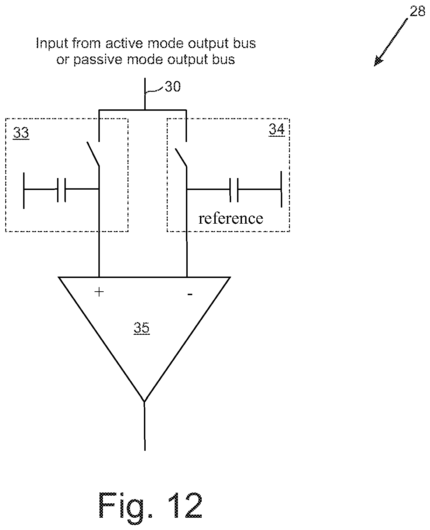

Figure 10 shows an embodiment with a charge amplifier 20, which can improve the gain of the signal on the passive readout bus 15. Figure 11 shows a further embodiment with the output of the charge amplifier 20 connected to a double sampling column amplifier 28. The double sampling column amplifier 28 is shared, on a time basis, between the active pixel mode readout bus 9 and the passive pixel mode readout bus 15. Switches 31, 32 in each of the buses 9, 15 allow a signal from one of the buses to be connected to the amplifier 28 at any time. A double sampling amplifier is a known type of amplifier which is typically used to: (i) sample a reference level (usually a reset level) and (ii) sample a signal level and to calculate the difference between these two sampled levels to compensate for any common mode noise and offset errors in the readout path. An example of a double sampling column amplifier is described in US 7,268,815. Using a double sampling amplifier for passive pixel mode readout can compensate for any offset errors in the charge amplifier or pixel readout in passive pixel mode. A further alternative would be to provide a dedicated column amplifier which is connected to, or connectable only to, the charge amplifier 20. However, this is less advantageous as it would increase the number of fabricated devices, and increase cost and area of the image sensor device. Figure 12 shows an example double sampling column amplifier 28. During any measurement operation, an input 30 is received from one of: (i) the active mode bus and (ii) the passive mode bus (via the charge amplifier 20). A first sample-and-hold circuit 34 samples a reference level. The reference level is the reset level of the charge sense amplifier, which will be after the switch 25 has been closed, and possibly opened again, but before the charge is dumped on to the column line. A second sample-and-hold circuit 33 samples the signal level after charge has been dumped on to the passive mode column line 15 from the selected group of pixels. The samples of signal level taken by the sample-and-hold circuits 33, 34 are made at different points in time on the same bus. In a charge transfer pixel, first the reset level is read, then the charge is transferred and the signal is read. In a conventional 3-transistor pixel (as in Figure 7) in active mode the measurements are taken in a different order: first the signal is read, then the pixel is reset and the reset (reference) level is read. In passive mode (as used for binning), the reference level corresponds to the level at the output of the charge sense amplifier after closing switch 25. In the configuration of Figure 11, this level can be sampled first as the reference level in the double sampling amplifier.

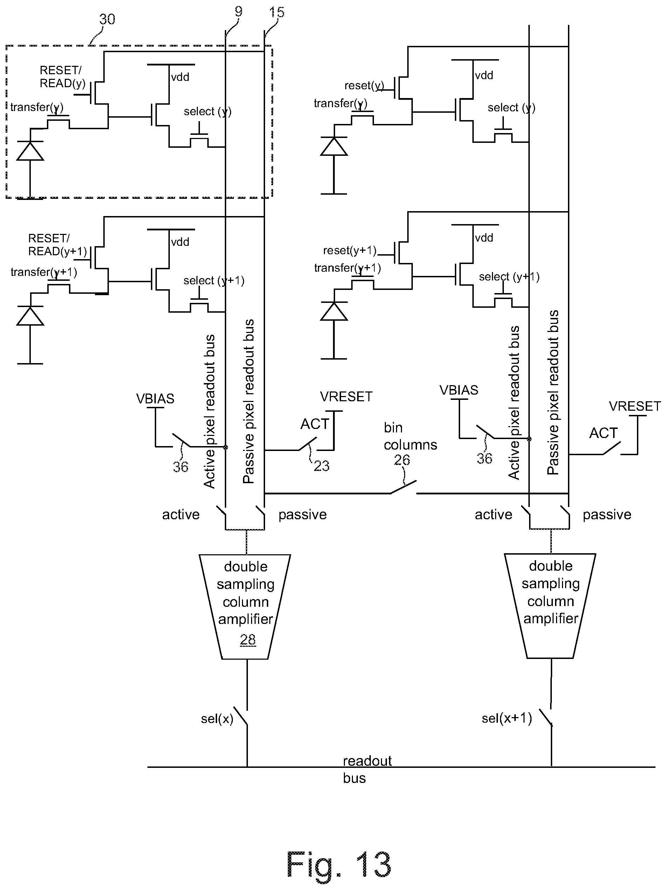

Figure 13 shows an alternative embodiment in which the passive mode output line 15 is directly connected to the voltage column amplifier 28, without a charge amplifier 20. It is possible to use this embodiment if the amount of transferred charge is large enough to generate a considerable signal swing on the column line, such as where many pixels are binned together. This embodiment can also result in a more compact circuit since the double sampling column amplifier 28 is already required for the active pixel readout mode. The operation of the circuit shown in figure 13 in passive pixel mode is as follows:
- all the pixel rows that need to be binned together are selected by closing the respective pixel reset/read switches M1. The floating diffusion node FD is reset using the ACT switch 23 to a voltage which is more than a threshold voltage lower than VDD. This ensures that the NMOS pixel reset switch M1 can be closed. The pixel reset/read switches M1 remain closed also in the next step. Adjacent passive pixel column buses 15 that require to be binned, are connected together by the column binning switches 26. The signal on the passive pixel column bus 15 is sampled. This is the reset reference signal.
- the transfer gates M4 are pulsed for all the rows that have to be binned together. This causes charges from the photodiodes 11A to be dumped onto the passive pixel column bus 15. The bus 15 is sampled again. This is the readout signal.
- The actual output signal at the output of the sensor is the difference between the two samples (readout signal - reset reference signal). This difference is calculated in the double sampling column amplifier 28 (or in an output amplifier of the sensor).

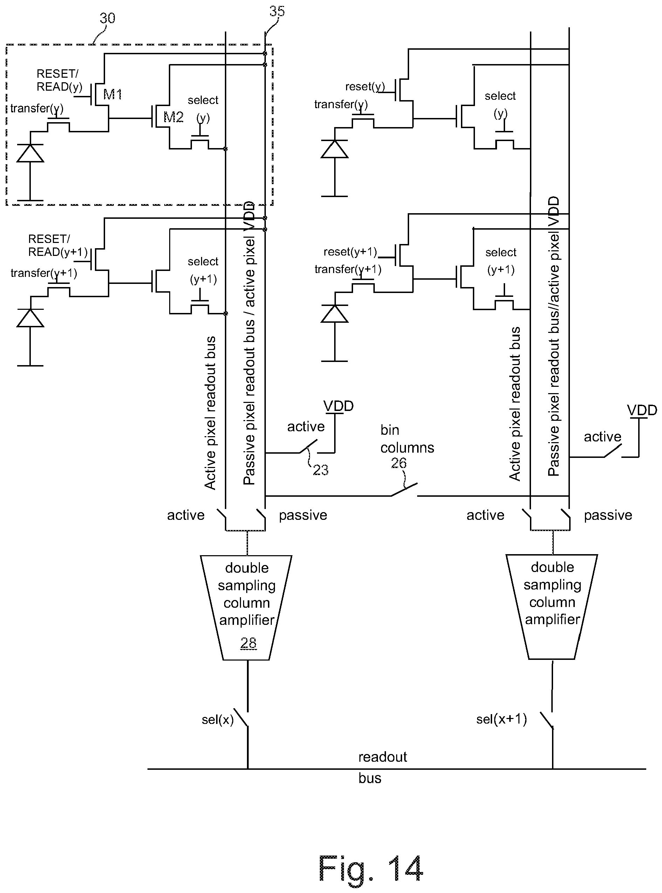

Comparing the circuits of Figures 6 & 9, and Figures 7 & 10, to a conventional active pixel circuit of Figure 5, it can be seen that only one additional column bus is required. This has an advantage that the charge binning function can be provided with little effect to the layout and dimensions of the pixel/array. For some cases, especially for low resolution image sensors, it is possible to use the existing vertically-oriented VDD supply line in the array as the passive pixel output line. This is shown in Figure 14. Both the RESET/READ transistor M1 and the buffer amplifier M2 in each pixel 30 are connected to the same line 35, and this line is also used as the passive mode output line on a time-shared basis. This configuration will increase the capacitance of the passive readout column bus, and this will lower the signal-to-noise ratio. Nevertheless, this arrangement can work if the capacitance of the bus is not too large.

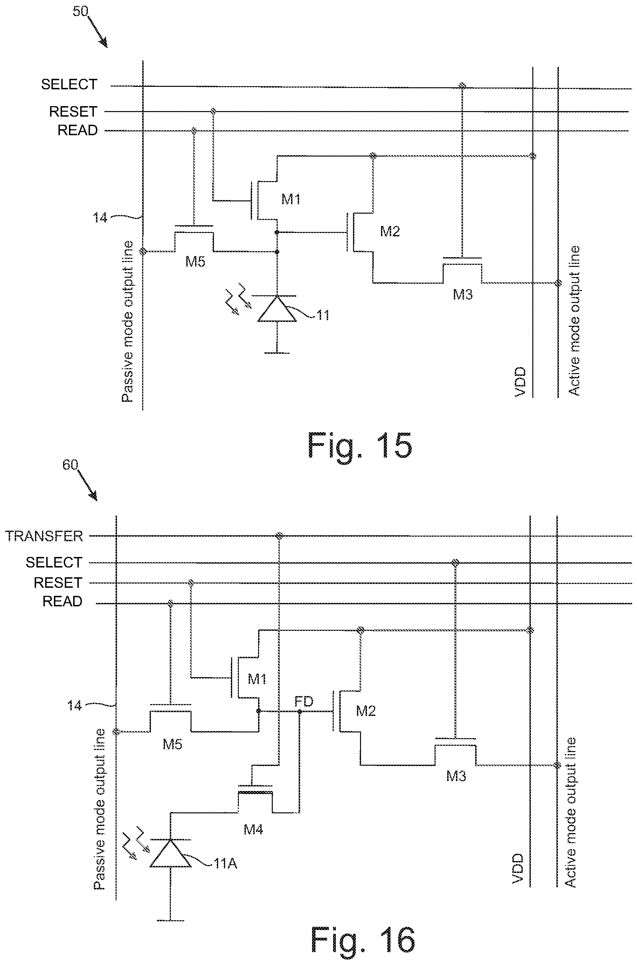

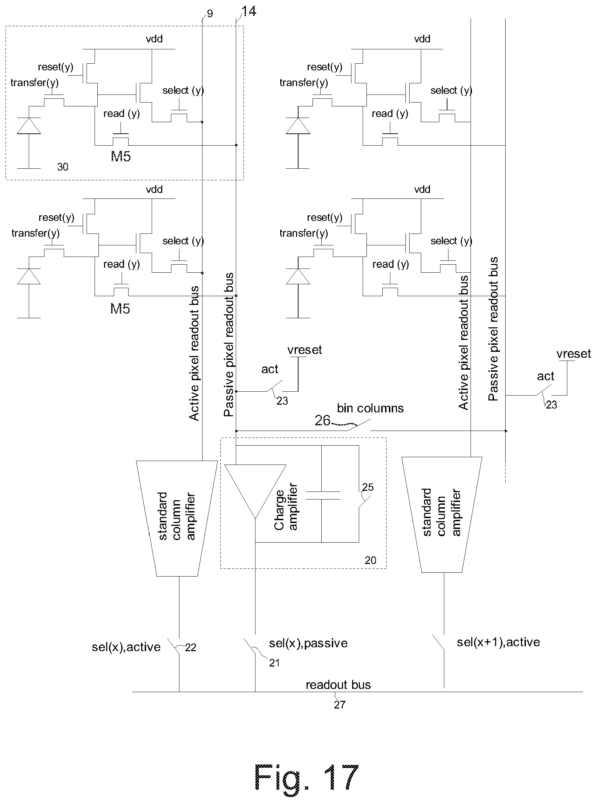

In the embodiments described above, the existing RESET switch M1 is also used as a READ switch and a single output line is used, on a time-shared basis, as a supply line for the RESET function and as an output line. Figures 15 and 16 show alternative embodiments where separate transistors, and lines, are provided for these functions and Figure 17 shows a corresponding architecture of an array of the pixels shown in Figure 16. The architecture of Figure 17 can also be used with the pixels of Figure 15. Figure 15 shows a conventional 3T active pixel modified to allow charge binning. An additional transistor M5 is added to the active pixel to selectively allow charge to be output, and binned, in a passive manner. The additional transistor M5 is connected between the cathode of photodiode 11 and a new output line 14. Output line 14 serves as a passive mode output line to which charge can be transferred from photodiode 11. Operation of the new transistor M5 is controlled by a new control line, READ. The RESET switch M1 is connected to supply line VDD and is operated in a conventional manner. A charge binning mode is provided by operating the pixel with a standard (n-well/substrate) photodiode as follows:
- reset the pixel. This can be achieved either by using the RESET transistor M1 to connect the sense node to VDD or by applying a reset to the column (charge) amplifier at the same time as the READ transistor M5 is turned on, which resets the column output line and therefore all pixels connected to the column output line. The latter technique has the advantage that the photodiode is inherently reset to the correct bias level, which is the reference level of the charge sense amplifier;
- allow charge to accumulate on photodiode 11;
- at a required time, reset the passive mode column output line 14 to a known voltage by closing switch 25 of the charge sense amplifier;
- dump the charge accumulated on photodiode 11 to output line 14 by closing the switch M5 (by applying a high signal on the READ line);
- measure the voltage swing on the column line 14;
- for binning of pixels on the same column, close respective READ switches M5 of different pixels at the same time and for binning of pixels on different columns, short the columns during this operation by using switch 26;
- optionally, the pixel is reset again.

The above sequence of steps describes how to passively read the pixel. The active pixel can be read in a conventional active pixel manner by switching on transistor M3, via SELECT line 7, and transferring a buffered voltage, via transistor M2, to the column output bus 9. It can be seen that the pixel can be used/read in an active mode, or in a passive mode.

Figure 16 shows how a conventional charge transfer, or pinned diode, pixel can be modified to allow the pixel to be read in a passive manner and in an active manner. An additional transistor M5 is added to the active pixel to allow charge to be output, and binned, in a passive manner. The additional transistor M5 is connected between the sense node and a new output line 14. The operation of the charge transfer pixel in passive readout mode is as follows:
- use the READ transistor M5. Make it high for all pixels that need to be binned;
- the switch is closed, the sense nodes of the pixels to be binned are now all connected to the column line;
- reset the column line (and the floating diffusions) by closing switch 25 of the charge sense amplifier in the column;
- dump the charge on the sense nodes and column line by closing the Transfer switch M4 (high signal on TRANSFER line);
- measure the voltage swing on the column line 14 after the charge transfer;
- for binning of pixels on the same column, close TRANSFER on the pixels to be binned;
- for binning of different columns, short the columns at the start of the readout sequence;
- optionally, an additional reset of the column line can be performed to deplete the photodiodes. To do this, switch 25 is closed again while the read and transfer transistors of the pixels to be reset are switched on. Alternatively, the reset transistor is used, and the reset and transfer transistors of the pixels to be reset are closed.

Some disadvantages of the embodiments shown in Figures 15 and 16 are that an additional transistor M5 is required, per pixel, and an additional control line (READ) is required, which can make the pixel larger. Also, the additional transistor M5 connected to the photodiode 11, 11A or sense node FD, will increase capacitance and therefore reduce the conversion gain of the pixel (conversion gain = conversion factor to convert the detected electrons to voltage, usually expressed in microvolt/electron).

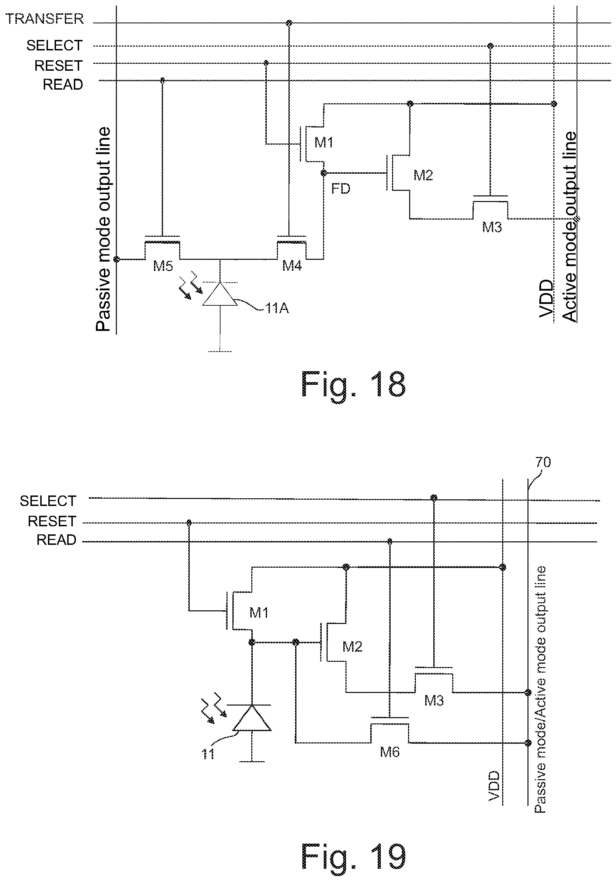

Figure 18 shows an alternative arrangement to that shown in Figure 16 in which the read transistor M5 is connected to the pinned photodiode 11A, and of the same type as transistor M4 (a so-called 'transfer gate'). The charge can then be directly dumped on the passive mode output line 15 by operating transistor M5. Advantageously, the entire charge of the photodiode is dumped on the passive mode output line 15, thereby allowing a low noise readout. A possible disadvantage of this embodiment is that it may reduce the performance of the photodiode, such as due to leakage through transistor M5 at the moment when it is switched off. The pixel of Figure 18 can also be operated as a global shutter pixel. For global shutter operation, the passive mode output line can be connected to VDD by a switch external to the pixel array, to let the passive mode output line act as a charge drain.

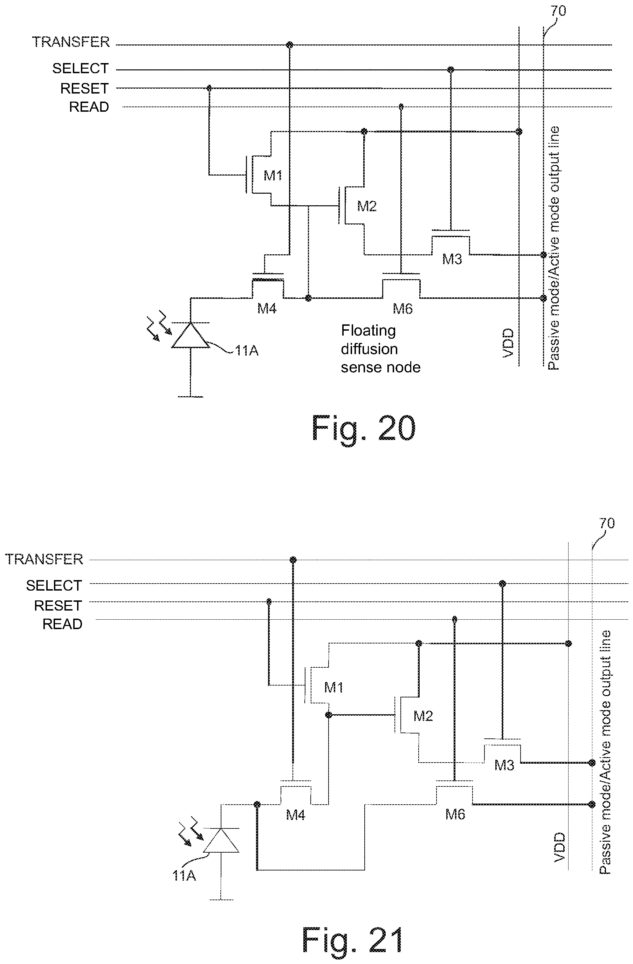

Figures 19-21 show a set of embodiments of the invention in which an output of transistor M3 and an output of transistor M6 are both connected to a single output line 70. The output line is used on a time-shared basis as an active mode output line and as a passive mode output line. The gate of transistor M6 is connected to a control line READ and is selectively turned on by a signal applied to the READ line. Figure 19 shows a 3T active pixel with the additional transistor M6 connected between the gate of buffer amplifier M2 and the combined output line 70. Figure 20 shows a charge transfer active pixel with the additional transistor M6 connected between the floating diffusion node and the combined output line 70. Figure 21 shows a charge transfer active pixel with the additional transistor M6 connected between the cathode of the pinned photodiode 11A and the combined output line 70. The corresponding architecture for an array of these pixels is not illustrated, but it has a similar form as that shown for other embodiments, except that there is only a single output line 70 connecting to a column of pixels. A (double sampling) column amplifier connects to the output line 70. Advantageously, a charge amplifier (20, Figure 7) is connected to the output line 70 via a switch. This switch allows the charge amplifier to receive an input from the output line 70 during the passive pixel/charge binning mode of operation, and allows the charge amplifier to be by-passed during the active pixel mode of operation. The output line 70, or an output of the charge amplifier can be selectively applied to an input of the column amplifier via switches, in the same way as shown in Figure 11 (see switches 31, 32).

In the embodiments described above each pixel comprises a single photo-sensitive element, a buffer amplifier and read out circuitry which can connect the output of the buffer amplifier to an active pixel output line (in active pixel mode) or transfer charge to a passive pixel output line (in passive pixel mode). It is also possible to apply the principles described above to so-called shared pixels. An example of a shared pixel is described in "A 1/4in 2M pixel CMOS image sensor with 1.75transistor/pixel", M. Mori et al, IEEE International Solid-State Circuits Conference, vol. XLVII, pp. 110 - 111, February 2004. In this type of pixel, a group of photodiodes are connected to a single floating diffusion and a single readout circuit is provided for the group of photodiodes. Each photodiode is individually connected to the floating diffusion by a transfer gate. The read out circuitry of the shared pixel can be modified to allow a passive pixel/charge binning mode of operation. Preferably, the modification comprises re-using the reset transistor M1 as a switch to connect the floating diffusion to a time-shared passive pixel mode output line /reference voltage supply line, in the same manner as shown in Figures 9 and 10. Alternatively, a dedicated additional READ transistor M5 can be provided, which connects to the floating diffusion. The timing of the clocking of the transfer gates and the RESET (or READ) lines is modified to transfer charge from each of the pixels in the group to the floating diffusion and on to the passive pixel mode output line. Advantageously, charge from the group of photodiodes is transferred concurrently. Charge from other shared pixels is transferred on to the passive pixel mode output line at the same time, thereby allowing charge binning. The number of photodiodes of the shared pixel which transfer charge during the passive pixel mode can be controlled by appropriate control of the clocking of the TRANSFER signals to the transfer gates.

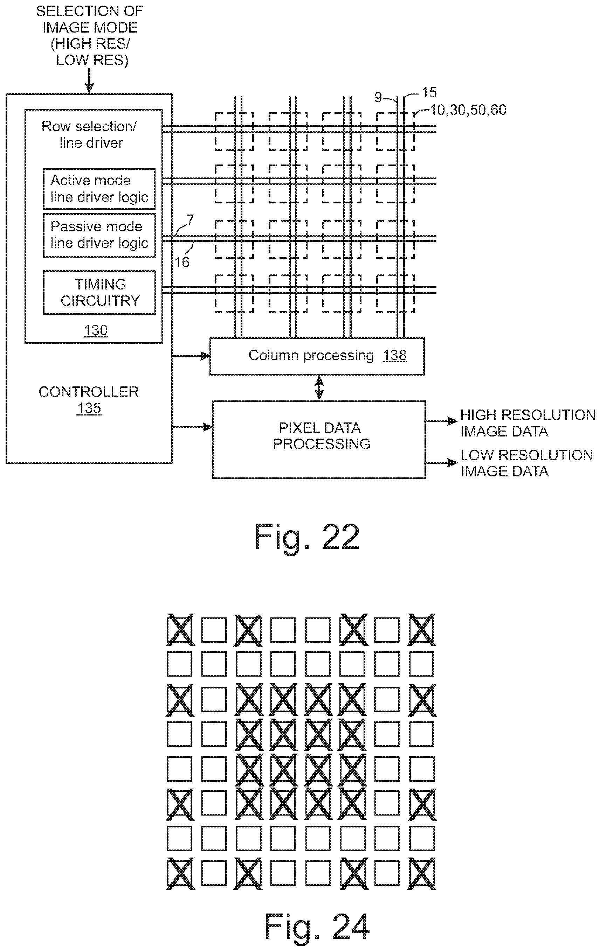

Figure 22 shows an overall architecture for an image sensor. A simplified four pixel by four pixel array is shown. Each pixel 10, 30, 50, 60 is as previously shown in Figures 6, 9, 15, 16 or 18-21. A controller 135 includes row selection/line driver circuitry 130 for driving pixels in the array. Controller 135 controls selection of pixels, and generates the control signals RESET, SELECT, TRANSFER and READ to control each pixel. Controller 135 also controls, via column processing circuitry 138, operation of the column amplifiers, readout from the column amplifiers (e.g. via switches 21, 22). Controller 135 also controls, via column processing circuitry 138, the operating state of the passive mode column bus 15, 35. Switch 23 connects the bus 15, 35 to a supply voltage VRESET during active pixel mode. During active pixel (high-resolution) mode, pixels are read on a line-by-line basis. Line Driver circuitry 130 generates signals RESET, SELECT, TRANSFER to cause a single pixel in each column to connect to the active mode output bus 9. Each of the pixels in a column is sequentially selected. During passive pixel/charge binning (low-resolution) mode, pixels are read in groups. Line Driver circuitry 130 generates signals RESET, SELECT, TRANSFER, (and READ, for embodiments which require a separate READ signal) to cause a group of pixels in each column to connect to the active mode output bus 15, 35. Line Driver circuitry 130 also operates switches 26 to connect passive mode buses 15, 35 of different columns together, such that charge is binned from a group of pixels which are distributed over different rows and different columns. The control logic of controller 130 can be stored in hard-coded form, such as in an Application Specific Integrated Circuit, or it can be stored in some form of reconfigurable storage, such as a logic array (programmable array, reconfigurable array) or a general-purpose processor which executes control software. All of the embodiments of pixel arrays described above allow a charge binning mode of operation in which charge is binned from groups of pixels, and the combination of charge from each group of pixels contributes to an element of a preview image. The charge binning mode can operate upon all pixels of the pixel array, or a sub-set of pixels of the pixel array. The charge binning process can be used to derive a low resolution image which makes use of all of the pixels of the array, or all of the pixels from a particular section of the array, to achieve the result shown in Figure 2.

Referring again to Figure 2, this shows the result 111 of combining - or "binning" - charge from a block of four neighbouring pixels in the full image 100. Figure 2 shows how a low resolution image is obtained by adding together information of neighbouring pixels. The addition of signals as shown in Figure 2 low-pass filters the image and avoids any moiré or aliasing effects. This can be contrasted with the sub-sampling technique of Figure 1 which results in loss of detail and aliasing. The addition of neighbour pixels can be obtained by digital processing, however, in that case the full resolution image must be read out from the sensor. This will limit the frame rate obtained in preview mode. It is better to do this addition on the image sensor to increase the frame rate, and in the charge domain, to improve the signal to noise ratio. Noise is introduced during the charge-to-voltage conversion. The advantage of binning in the charge domain is that the addition is executed noise-free, since noise is only added later during the readout of the charge packet. Furthermore, since the signal of different pixels is added, the signal that is read out is larger than the signal of a single pixel as used in sub-sampling. This allows to operate charge binning at lower exposure times, resulting in higher frame rates under low light conditions. The result of this process is a one quarter resolution image 112. Control logic in row driver circuits causes a particular combination of pixels to simultaneously dump accumulated charge onto their respective output line 15, 35. Inter-column switches 26 are operated as required, to bin charge between columns.

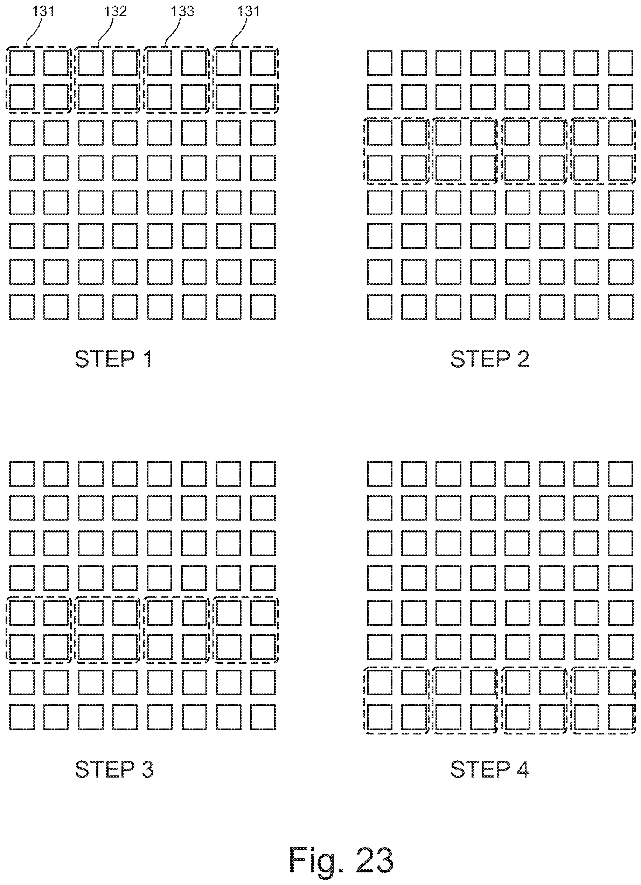

Figure 23 shows a sequence of steps of the charge binning process. In the first step, pixels from two adjacent rows, and two adjacent columns, are combined. Four separate groups of pixels 131, 132, 133, 134 are individually combined at the same time to produce the first row of binned image elements. In step two, the next four groups of pixels are individually binned to produce the second row of binned image elements. The process is repeated in subsequent steps to produce further rows of binned image elements. The process just described can be restricted to a particular region of the image (e.g. a centre region of the image) and can be used to create a low resolution preview at a very high frame rate.

For colour imaging, a Bayer colour filter pattern it is typically placed in front of the pixel array. The effect of the Bayer filter is that pixels in odd rows/columns, or pixels in even rows/columns represent the same colour. Advantageously, the charge binning mode should combine pixels of the same colour. For a typical Bayer filter configuration, this requires binning of charges from pixels in only odd rows/columns or even rows/columns. The "bin columns" switch 26 allows this operation for the columns, the row selection block 130 allows this for the rows.

The method is limited by the resolution of the sensor. If the resolution is too large, the passive pixel mode column bus will have a capacitance which is too large, and this limits the read noise. The method can then only be used if many pixels are binned together.

This method can also be used for light metering, or to detect a sudden light increase on the focal plane (as for example happens at the moment when a flash is fired in a single-shot camera or digital X-ray system). To enable this, the sensor is operated with a large number of pixels binned on the same column, and possibly also with pixels of different columns binned together. The sensor is operated in preview mode with a very low resolution. Because of the large number of pixels binned, the exposure time can be small and the frame rate can be high. The average light level can be deduced from the read value. When a sudden change in intensity is observed, it is assumed that the flash is detected. At that moment, the sensor clocking is switched to acquire a full resolution image For light metering different weight factors can be attributed to different areas of the image. As a first example, for centre-weighted light metering more pixels from the centre region of the image are binned together compared to peripheral regions of the image. Figure 24 shows an example pattern of pixels that can be combined for center-weighted metering, with each pixel marked "X" contributing to the meter reading. In the first column, four pixels are combined and in the third column six pixels are combined. As a second example, for spot light metering, only pixels from a certain region of interest should be binned together. For metering, it is the total amount of light, calculated across the required pattern of pixels, which is of interest and so all of the pixels in the required metering pattern can be combined in a single charge binning step. It will be appreciated that any other required combination of pixels can be combined in a similar manner.

The invention is not limited to the embodiments described herein, which may be modified or varied without departing from the scope of the appended claims.

## Claims

1. A pixel array comprising:
a plurality of pixels arranged in columns;
an active pixel mode column output line for a column of pixels;
a passive pixel/charge binning mode column output line for the column of pixels;
and wherein each pixel in the column of pixels comprise:
a photo-sensitive element for generating charges responsive to electromagnetic radiation;
a buffer amplifier for buffering a voltage proportional to the charges generated by the photo-sensitive element;
a first switch for selectively connecting an output of the buffer amplifier to the active pixel mode column output line;
a second switch for selectively transferring at least part of the charges generated by the photo-sensitive element to the passive pixel/charge binning mode column output line.

2. A pixel array according to claim 1 further comprising a first charge transfer transistor connected between the photo-sensitive element and the buffer amplifier for selectively transferring charge from the photo-sensitive element to an input of the buffer amplifier.

3. A pixel array according to claim 2 wherein the second switch is connected between the input of the buffer amplifier and the passive pixel/charge binning mode column output line.

4. A pixel array according to claim 2 wherein the second switch is configured as a second charge transfer transistor connected between the photo-sensitive element and the passive pixel/charge binning mode column output line for selectively transferring charge from the photo-sensitive element to the passive pixel/charge binning mode column output line.

5. A pixel array according to claim 1 wherein the photo-sensitive element is connected directly to an input of the buffer amplifier.

6. A pixel array according to any one of the preceding claims wherein the second switch is also arranged to set an input of the buffer amplifier at a reference voltage and the passive pixel/charge binning mode column output line is operable, on a time-shared basis, as a supply line for providing the reference voltage.

7. A pixel array according to any one of claims 1 to 5 wherein there is a single column output line for a column of pixels which is operable, on a time-shared basis, as the active pixel mode column output line and as the passive pixel/charge binning mode column output line.

8. A pixel array according to any one of the preceding claims further comprising:
a controller arranged to cause the pixels to be selectively operated in:
an active pixel mode in which the first switch is operated to cause an output of the buffer amplifier in the pixel to be connected to the active pixel mode column output line; and
a passive pixel/charge binning mode in which the second switch is operated to cause at least part of the charge from the pixel to be transferred to the passive pixel/charge binning mode column output line.

9. A pixel array according to any one of the preceding claims further comprising a charge-to-voltage converter connected to at least one of the passive pixel/charge binning mode column output lines and arranged to generate a voltage in response to charge transferred to the passive pixel mode/charge binning column output line, and wherein a controller is arranged to:
in the passive pixel/charge binning mode, to operate the second switches of a group of pixels in a column of pixels to cause charge from the group of pixels in the column to be transferred to the passive pixel/charge binning mode column output line and reading the voltage corresponding to the charge contributed by the group of pixels.

10. A pixel array according to claim 9 wherein a total set of pixels in a column are arranged in sub-sets and the controller is arranged to operate the second switches of a first sub-set of the pixels in a column and read the voltage during a first reading period, and to operate the second switches of other sub-sets of the pixels in the column and read the voltage during respective other reading periods.

11. A pixel array according to claim 9 or 10 wherein the charge-to-voltage converter is a charge amplifier.

12. A pixel array according to any one of the preceding claims wherein each column has a column amplifier which is used, on a time-shared basis, for the active pixel mode, and for the passive pixel/charge binning mode.

13. A pixel array according to any one of the preceding claims further comprising a column-connecting switch for selectively connecting the passive pixel/charge binning mode column output lines of at least two columns in the array during the passive pixel/charge binning mode.

14. A pixel array according to any one of the preceding claims wherein the passive pixel/charge binning mode column output line is arranged to provide a supply voltage to the buffer amplifier in each pixel during the active pixel mode.

15. A method of reading an array of pixels, the array comprising a plurality of pixels arranged in columns, an active pixel mode column output line for a column of pixels, a passive pixel/charge binning mode column output line for the column of pixels and each pixel comprising a photo-sensitive element for generating charges responsive to electromagnetic radiation, a buffer amplifier for buffering a voltage proportional to the charges generated by the photo-sensitive element, a first switch for selectively connecting an output of the buffer amplifier to an active pixel mode column output line and a second switch for selectively transferring charges generated by the photo-sensitive element to a passive pixel mode column output line, the method comprising selectively operating the pixels of a column of the array in:
an active pixel mode in which the first switch of a pixel is operated to cause an output of the buffer amplifier in the pixel to be connected to the active pixel mode column output line; and,
a passive pixel/charge binning mode in which the second switch of the pixel is operated to cause at least part of the charges from the pixel to be transferred to the passive pixel mode column output line.

## Patentansprüche

1. Pixelmatrix, Folgendes aufweisend:
mehrere Pixel, die in Spalten angeordnet sind;
eine Aktivpixelmodus-Spaltenausgangsleitung für eine Spalte von Pixeln;
eine Passivpixel-/Ladungseinteilungsmodus-Spaltenausgangsleitung für die Spalte von Pixeln;
und wobei jedes Pixel in der Spalte von Pixeln umfasst:
ein lichtempfindliches Element, um im Ansprechen auf elektromagnetische Strahlung Ladungen zu erzeugen;
einen Pufferverstärker zum Puffern einer zu den durch das lichtempfindliche Element erzeugten Ladungen proportionalen Spannung;
einen ersten Schalter, um einen Ausgang des Pufferverstärkers selektiv an die Aktivpixelmodus-Spaltenausgangsleitung anzuschließen;
einen zweiten Schalter, um zumindest einen Teil der durch das lichtempfindliche Element erzeugten Ladungen selektiv zur Passivpixel-/Ladungseinteilungsmodus-Spaltenausgangsleitung zu übertragen.

2. Pixelmatrix nach Anspruch 1, darüber hinaus einen ersten Ladungsübertragungstransistor umfassend, der zwischen dem lichtempfindlichen Element und dem Pufferverstärker angeschlossen ist, um Ladung vom lichtempfindlichen Element selektiv zu einem Eingang des Pufferverstärkers zu übertragen.

3. Pixelmatrix nach Anspruch 2, wobei der zweite Schalter zwischen dem Eingang des Pufferverstärkers und der Passivpixel-/Ladungseinteilungsmodus-Spaltenausgangsleitung angeschlossen ist.

4. Pixelmatrix nach Anspruch 2, wobei der zweite Schalter als zweiter Ladungsübertragungstransistor ausgelegt ist, der zwischen dem lichtempfindlichen Element und der Passivpixel-/Ladungseinteilungsmodus-Spaltenausgangsleitung angeschlossen ist, um Ladung vom lichtempfindlichen Element selektiv zur Passivpixel-/Ladungseinteilungsmodus-Spaltenausgangsleitung zu übertragen.

5. Pixelmatrix nach Anspruch 1, wobei das lichtempfindliche Element direkt an einen Eingang des Pufferverstärkers angeschlossen ist.

6. Pixelmatrix nach einem der vorhergehenden Ansprüche, wobei der zweite Schalter auch dazu eingerichtet ist, einen Eingang des Pufferverstärkers auf eine Referenzspannung einzustellen, und die Passivpixel-/Ladungseinteilungsmodus-Spaltenausgangsleitung auf einer Zeitmultiplexbasis als Versorgungsleitung zum Bereitstellen der Referenzspannung betreibbar ist.

7. Pixelmatrix nach einem der Ansprüche 1 bis 5, wobei es eine einzige Spaltenausgangsleitung für eine Spalte von Pixeln gibt, die auf einer Zeitmultiplexbasis als die Aktivpixelmodus-Spaltenausgangsleitung und als die Passivpixel-/Ladungseinteilungsmodus-Spaltenausgangsleitung betreibbar ist.

8. Pixelmatrix nach einem der vorhergehenden Ansprüche, darüber hinaus umfassend:
eine Steuerung, die dazu eingerichtet ist, zu bewirken, dass die Pixel selektiv betätigt werden in:
einem Aktivpixelmodus, bei dem der erste Schalter betätigt wird, um zu bewirken, dass ein Ausgang des Pufferverstärkers im Pixel an die Aktivpixelmodus-Spaltenausgangsleitung angeschlossen wird; und
einem Passivpixel-/Ladungseinteilungsmodus, bei dem der zweite Schalter betätigt wird, um zu bewirken, dass zumindest ein Teil der Ladung aus dem Pixel an die Passivpixel-/Ladungseinteilungsmodus-Spaltenausgangsleitung übertragen wird.

9. Pixelmatrix nach einem der vorhergehenden Ansprüche, darüber hinaus einen Ladungs-/Spannungsumsetzer umfassend, der an mindestens eine der Passivpixel-/Ladungseinteilungsmodus-Spaltenausgangsleitungen angeschlossen und dazu eingerichtet ist, eine Spannung im Ansprechen auf die an die Passivpixel-/Ladungseinteilungsmodus-Spaltenausgangsleitung übertragene Ladung zu erzeugen, und wobei eine Steuerung dazu eingerichtet ist:
im Passivpixel-/Ladungseinteilungsmodus die zweiten Schalter einer Gruppe von Pixeln in einer Spalte von Pixeln zu betätigen, um zu bewirken, dass die Ladung aus der Gruppe von Pixeln in der Spalte an die Passivpixel-/Ladungseinteilungsmodus-Spaltenausgangsleitung übertragen wird, und die Spannung ausgelesen wird, die der durch die Gruppe von Pixeln beigetragenen Ladung entspricht.

10. Pixelmatrix nach Anspruch 9, wobei ein Gesamtsatz von Pixeln in einer Spalte in Teilsätzen angeordnet ist, und die Steuerung dazu eingerichtet ist, die zweiten Schalter eines ersten Teilsatzes von Pixeln in einer Spalte zu betätigen und die Spannung während eines ersten Auslesezeitraums auszulesen, und die zweiten Schalter von anderen Teilsätzen der Pixel in der Spalte zu betätigen und die Spannung während jeweiliger anderer Auslesezeiträume auszulesen.

11. Pixelmatrix nach Anspruch 9 oder 10, wobei es sich bei dem Ladungs-/Spannungsumsetzer um einen Ladungsverstärker handelt.

12. Pixelmatrix nach einem der vorhergehenden Ansprüche, wobei jede Spalte einen Spaltenverstärker hat, der auf einer Zeitmultiplexbasis für den Aktivpixelmodus und für den Passivpixel-/Ladungseinteilungsmodus verwendet wird.

13. Pixelmatrix nach einem der vorhergehenden Ansprüche, darüber hinaus einen Spaltenanschließschalter umfassend, um die Passivpixel-/Ladungseinteilungsmodus-Spaltenausgangsleitungen mindestens zweier Spalten in der Matrix während des Passivpixel-/Ladungseinteilungsmodus selektiv anzuschließen.

14. Pixelmatrix nach einem der vorhergehenden Ansprüche, wobei die Passivpixel-/Ladungseinteilungsmodus-Spaltenausgangsleitung dazu eingerichtet ist, dem Pufferverstärker in jedem Pixel während des Aktivpixelmodus eine Versorgungsspannung bereitzustellen.

15. Verfahren zum Auslesen einer Matrix von Pixeln, wobei die Matrix mehrere in Spalten angeordnete Pixel, eine Aktivpixelmodus-Spaltenausgangsleitung für eine Spalte von Pixeln, eine Passivpixel-/Ladungseinteilungsmodus-Spaltenausgangsleitung für die Spalte von Pixeln umfasst und jedes Pixel ein lichtempfindliches Element, um im Ansprechen auf elektromagnetische Strahlung Ladungen zu erzeugen, einen Pufferverstärker zum Puffern einer zu den durch das lichtempfindliche Element erzeugten Ladungen proportionalen Spannung, einen ersten Schalter, um einen Ausgang des Pufferverstärkers selektiv an die Aktivpixelmodus-Spaltenausgangsleitung anzuschließen, und einen zweiten Schalter umfasst, um durch das lichtempfindliche Element erzeugte Ladungen selektiv zu einer Passivpixelmodus-Spaltenausgangsleitung zu übertragen, wobei das Verfahren umfasst, die Pixel einer Spalte der Matrix selektiv zu betätigen in:
einem Aktivpixelmodus, bei dem der erste Schalter eines Pixels betätigt wird, um zu bewirken, dass ein Ausgang des Pufferverstärkers im Pixel an die Aktivpixelmodus-Spaltenausgangsleitung angeschlossen wird; und
einem Passivpixel-/Ladungseinteilungsmodus, bei dem der zweite Schalter des Pixels betätigt wird, um zu bewirken, dass zumindest ein Teil der Ladung aus dem Pixel an die Passivpixelmodus-Spaltenausgangsleitung übertragen wird.

## Revendications

1. Matrice de pixels comprenant:
une pluralité de pixels agencés en colonnes;
une ligne de sortie de colonne en mode de pixel actif pour une colonne de pixels;
une ligne de sortie de colonne en mode de classification de pixel passif/charge pour la colonne de pixels;
et sachant que chaque pixel dans la colonne de pixels comprend:
un élément photosensible destiné à générer des charges en réponse à un rayonnement électromagnétique;
un amplificateur tampon destiné à mettre en tampon une tension proportionnelle aux charges générées par l'élément photosensible;
un premier commutateur destiné à connecter sélectivement une sortie de l'amplificateur tampon à la ligne de sortie de colonne en mode de pixel actif;
un deuxième commutateur destiné à transférer sélectivement au moins une partie des charges générées par l'élément photosensible à la ligne de sortie de colonne en mode de classification de pixel passif/charge.

2. Matrice de pixels selon la revendication 1, comprenant en outre un premier transistor de transfert de charge connecté entre l'élément photosensible et l'amplificateur tampon pour transférer sélectivement une charge de l'élément photosensible à une entrée de l'amplificateur tampon.

3. Matrice de pixels selon la revendication 2, sachant que le deuxième commutateur est connecté entre l'entrée de l'amplificateur tampon et la ligne de sortie de colonne en mode de classification de pixel passif/charge.

4. Matrice de pixels selon la revendication 2, sachant que le deuxième commutateur est configuré comme un deuxième transistor de transfert de charge connecté entre l'élément photosensible et la ligne de sortie de colonne en mode de classification de pixel passif/charge pour transférer sélectivement une charge de l'élément photosensible à la ligne de sortie de colonne en mode de classification de pixel passif/charge.

5. Matrice de pixels selon la revendication 1, sachant que l'élément photosensible est connecté directement à une entrée de l'amplificateur tampon.

6. Matrice de pixels selon l'une quelconque des revendications précédentes, sachant que le deuxième commutateur est également agencé pour établir une entrée de l'amplificateur tampon à une tension de référence et la ligne de sortie de colonne en mode de classification de pixel passif/charge est actionnable, sur une base de temps partagé, en tant que ligne d'alimentation destinée à fournir la tension de référence.

7. Matrice de pixels selon l'une quelconque des revendications 1 à 5, sachant qu'il existe une ligne de sortie de colonne unique pour une colonne de pixels qui est actionnable, sur une base de temps partagé, en tant que la ligne de sortie de colonne en mode de pixel actif et en tant que la ligne de sortie de colonne en mode de classification de pixel passif/charge.

8. Matrice de pixels selon l'une quelconque des revendications précédentes, comprenant en outre:
une unité de commande agencée pour faire en sorte que les pixels soient actionnés sélectivement en:
un mode de pixel actif dans lequel le premier commutateur est actionné pour faire en sorte qu'une sortie de l'amplificateur tampon dans le pixel soit connecté à la ligne de sortie de colonne en mode de pixel actif; et
un mode de classification de pixel passif/charge dans lequel le deuxième commutateur est actionné pour faire en sorte qu'au moins une partie de la charge provenant du pixel soit transférée à la ligne de sortie de colonne en mode de classification de pixel passif/charge.

9. Matrice de pixels selon l'une quelconque des revendications précédentes, comprenant en outre un convertisseur charge-tension connecté à au moins une des lignes de sortie de colonne en mode de classification de pixel passif/charge et agencé pour générer une tension en réponse à und charge transférée à la ligne de sortie de colonne en mode de classification de pixel passif/charge, et sachant qu'une unité de commande est agencée pour:
dans le mode de classification de pixel passif/charge, actionner les deuxièmes commutateurs d'un groupe de pixels dans une colonne de pixels pour faire en sorte qu'une charge provenant du groupe de pixels dans la colonne soit transférée à la ligne de sortie de colonne en mode de classification de pixel passif/charge et relever la tension correspondant à la charge fournie par le groupe de pixels.

10. Matrice de pixels selon la revendication 9, sachant qu'un ensemble total de pixels dans une colonne est agencé en sous-ensembles et l'unité de commande est agencée pour actionner les deuxièmes commutateurs d'un premier sous-ensemble des pixels dans une colonne et relever la tension pendant une première période de relevé, et pour actionner les deuxièmes commutateurs d'autres sous-ensembles des pixels dans la colonne et relever la tension pendant d'autres périodes de relevé respectives.

11. Matrice de pixels selon la revendication 9 ou 10, sachant que le convertisseur charge-tension est un amplificateur de charge.

12. Matrice de pixels selon l'une quelconque des revendications précédentes, sachant que chaque colonne a un amplificateur de colonne qui est utilisé, sur une base de temps partagé, pour le mode de pixel actif, et pour le mode de classification de pixel passif/charge.

13. Matrice de pixels selon l'une quelconque des revendications précédentes, comprenant en outre un commutateur de connexion de colonne destiné à connecter sélectivement les lignes de sortie de colonne en mode de classification de pixel passif/charge d'au moins deux colonnes dans la matrice pendant le mode de classification de pixel passif/charge.

14. Matrice de pixels selon l'une quelconque des revendications précédentes, sachant que la ligne de sortie de colonne en mode de classification de pixel passif/charge est agencée pour fournir une tension d'alimentation à l'amplificateur tampon dans chaque pixel pendant le mode de pixel actif.

15. Procédé de relevé d'une matrice de pixels, la matrice comprenant une pluralité de pixels agencés en colonnes, une ligne de sortie de colonne en mode de pixel actif pour une colonne de pixels, une ligne de sortie de colonne en mode de classification de pixel passif/charge pour la colonne de pixels et chaque pixel comprenant un élément photosensible destiné à générer des charges en réponse à un rayonnement électromagnétique, un amplificateur tampon destiné à mettre en tampon une tension proportionnelle aux charges générées par l'élément photosensible, un premier commutateur destiné à connecter sélectivement une sortie de l'amplificateur tampon à une ligne de sortie de colonne en mode de pixel actif et un deuxième commutateur destiné à transférer sélectivement des charges générées par l'élément photosensible à une ligne de sortie de colonne en mode de pixel passif, le procédé comprenant l'actionnement sélectif des pixels d'une colonne de la matrice en:
un mode de pixel actif dans lequel le premier commutateur d'un pixel est actionné pour faire en sorte qu'une sortie de l'amplificateur tampon dans le pixel soit connecté à la ligne de sortie de colonne en mode de pixel actif; et
un mode de classification de pixel passif/charge dans lequel le deuxième commutateur du pixel est actionné pour faire en sorte qu'au moins une partie des charges provenant du pixel soit transférée à la ligne de sortie de colonne en mode de pixel passif.
